# EUROPEAN PATENT SPECIFICATION

(11) **EP 1 434 415 B1**
(45) Date of publication and mention of the grant of the patent: **25.12.2013**
(21) Application number: 03252030.6
(22) Date of filing: 31.03.2003
(51) Int. Cl.: H04M 3/533

(54) **Flexible distributed/centralized architecture for voice/unified messaging system**
Flexibel verteilte und zentralisierte Architektur für ein Sprachnachrichten - bzw. unified messaging system
Architecture distribuée/centralisée flexible pour un système de messagerie vocale/unifiée

(30) Priority: 24.12.2002 GB 0230197
(43) Date of publication of application: 30.06.2004
(73) Proprietor: Avaya UK, Guildford, Surrey GU2 7YL (GB)
(72) Inventor: Didcock, Clifford Neil, Wantage Osfordshire OX12 8LX (GB); Wilson, Michael Geoffrey Andrew, London E11 1JH (GB)
(74) Representative: Williams, David John

(56) References cited:
- EP-A- 0 567 294
- EP-A- 1 109 391
- US-A1- 2001 011 303
- US-B1- 6 411 684

## Description

### Field of the Invention

The present invention relates to the field of messaging systems, and particularly to voice messaging and unified messaging systems.

### Background to the Invention

Messaging systems are well-known in the art. One of the simplest form of messaging system is a voice messaging system. Computer Telephony Integration (CTI) is a term which refers to the integration of computer architectures with telephony systems. A voice messaging system is an example of a CTI system, and a further example is a unified messaging system.

Voice or unified messaging systems have conventionally been deployed in one of three implementations.

In a first voice messaging implementation a voice messaging (or unified messaging) system is co-located with a subscriber's telephone switch, i.e. a subscriber's private branch exchange (PBX). Within a multi-site organization or enterprise this will tend to result in each physical location (which has its own telephone switch) having a separate voice messaging (or unified messaging) system. For an enterprise with many distributed locations, such an arrangement requires the deployment of many (possibly small) systems resulting in considerable IT administrative costs.

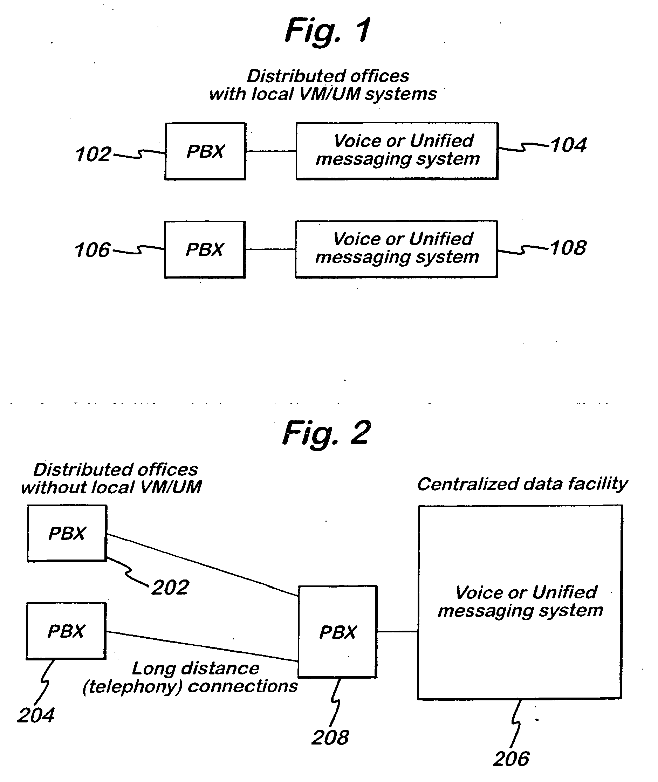

Figure 1 shows two distributed locations each with their own telephone switch, specifically a PBX 102 and 106 respectively, and respective dedicated unified or voice messaging systems 104 and 108. This system provides, at least, the following three typical voice messaging functions: call answering, automated attendant and subscriber access.
1. The call answering feature is initiated when calls are forwarded by the telephone system as a result of the called party not answering (e.g. due to a busy or no-answer condition).
2. The automated attendant feature offers callers a menu for automatically routing a call to the desired answering point, without the need for operator intervention.
3. The subscriber access feature allows subscribers, or mailbox owners, of the voice messaging system to call into the system and retrieve their messages over the phone.

In a second voice messaging implementation, the voice messaging system utilizes a deployment of a central messaging system serving multiple remote locations. This form of deployment requires long-distance telephone connections to be provided between the remote private branch exchanges (PBXs), serving remote locations, and the centralized messaging system.

Figure 2 shows two locations each having a respective PBX 202 and 204 being served by a single centralized unified or voice messaging system 206 associated with a single centralized PBX 208. The long distance telephone connections generally need to be provided regardless of their use (i.e. it is necessary to purchase enough capacity to handle busy periods). In addition some voice messaging features are lost in the centralized arrangement of Figure 2. The automated attendant application provides callers into an office or building with the ability to connect to a user. This capability is not provided in the centralized arrangement of Figure 2: the system providing the automated attendant function handles all users for all systems, and so does not provide service equivalent to a human attendant at the remote site. Additionally, different offices may be located in different countries with different language requirements. A simple example is that a first office may be in Canada and need both English and French languages, whereas another office served from the same centralized facility may have entirely, non-overlapping, language requirements, for example located in Mexico and requiring Spanish. A common and unique numbering plan across all mailboxes across all sites is also needed.

In a third implementation the second implementation is modified such that the long-distance telephone connectivity is provided by an organisation's (existing) data (IP) Wide Area network (WAN), possibly using Voice over Internet Protocol (VoIP). This deployment puts a strict requirement on the bandwidth and more critically the quality of service (e.g. the network latency) characteristics of the corporation's WAN. This most generally is not, and will not, be met for the majority of corporations now or in the near future.

EP-A-1109391 discloses a distributed voice messaging system. A centralized voice mail system is deployed at a private branch exchange associated with a company headquarters. Message taker systems are deployed at distributed private branch exchanges. An outgoing user recorded message for a user may be recorded at the centralized voice mail system, and copied to the message taker system associated with the user's distributed private branch exchange. An incoming recorded message for a called user may be recorded at the message taker system associated with the private branch exchange associated with the called user, before being transferred to the centralized voice mail system.

It is an aim of the present invention to provide an improved messaging system. A further aim is to provide such a system offering increased deployment flexibility.

### Summary of the Invention

In a first aspect the present invention provides a messaging system according to claim 1. The messaging system is preferably a voice messaging system or unified messaging system.

There may be provided a plurality of distributed front-end messaging systems each associated with a respective plurality of users and each including a cache means, wherein the centralized data store is adapted to store data associated with all users of said front-end messaging systems.

There may be further provided a centralized front-end messaging system associated with said centralized data store. The centralized front-end messaging system may be associated with a plurality of users, data associated with said users being stored in the centralized data store.

The centralized front-end messaging system may provide at least one messaging function for users of said at least one distributed front-end messaging system. The centralized front-end messaging system may be adapted to identify the front-end messaging system of a user. The centralized messaging system may be adapted to identify the front-end messaging system of a user in dependence on a called number, a calling number, or a unique user identifier.

The centralized messaging system may provide access to all stored data associated with said at least one distributed front-end messaging system associated with the user.

The centralized data store may store configuration data and message data associated with all users.

The at least one voice messaging function may include call answering. Said at least one messaging function may be a subscriber access function.

Each front-end messaging system may be associated with a respective Voice Mail Domain. Each front-end messaging system may be associated with a telecommunications switch.

In a further aspect the present invention provides a method according to claim 15.

The step of storing the data at said at least one distributed location may comprise the step of caching the data at the centralized location. The method may further comprise step of providing at least one messaging function to users at the at least one distributed front-end messaging system in dependence on data stored at the centralized locations. The method may further comprise the step of accessing the centralized location directly.

In further aspects, the present invention also provides a messaging system comprising a plurality of remote servers and a centralized data store associated with said plurality of remote servers, in which system the centralized data store includes means for storing messages and data associated with all users of the plurality of remote servers, and the plurality of remote servers are each associated with a respective cache means for storing at least a portion of the data associated with users of said remote server such that at least one voice messaging function can be provided to users of said voice server independent of the centralized message store. The messaging system is preferably a unified messaging or voice messaging system.

The at least one voice messaging function may include call answering.

The plurality of voice servers may be associated with a plurality of Voice Mail Domains. The number of voice servers may correspond to the number of Voice Mail Domains. Each voice server may be associated with a telecommunications switch. The telecommunications switch may be a public branch exchange.

The centralized data store may further be provided with a collection of front end servers or a single server, said interface being connected to a dedicated telecommunications switch, such a private branch exchange. Such switch may provide subscriber access to the centralized data store.

The centralized data store may provide a common message store for all voice mail domains and a common directory store for all voice mail domains.

There may be provided for subscriber access to the centralized data store via said interface.

In accordance with embodiments of the invention the messaging function is architecturally split into a number of separate components which, critically, can be implemented in at least two separate computer systems. These systems can be deployed:
i. In separate physical locations connected using a data network. The message storage can be centralized within a single (or few) data storage facilities, providing security, simplicity and management costs benefits.
ii. These systems provide the beneficial external user characteristics normally derived from multiple distributed systems (e.g. a local automated attendant is provided, specific language support etc).
iii. In addition these systems may be engineered to provide reliable voice/unified messaging support without strict requirements on data network availability and quality of service (QoS).

Such an architecture allows much more flexibility of deployment for voice messaging or unified messaging systems.

There are considerable cost savings to be realized within enterprises by centralizing the storage of corporate data. Messages within e-mail or voice-mail systems derive similar benefits from a centralized storage policy. A geographically distributed Unified or Voice Messaging architecture provides a mechanism to deploy part of the Unified or Voice messaging function co-located with a subscribers telephone switch while also allowing for a centralized message storage facility.

### Brief Description of the Drawings

The invention is now described by way of example with reference to the accompanying figures, in which:
Figure 1 illustrates an example of a voice or unified messaging system at which telephone switches and messaging systems are deployed at multiple locations, as known in the art;
Figure 2 illustrates an example of a voice or unified messaging system at which telephone switches are deployed at multiple locations and associated with a central messaging system, as known in the art:
Figure 3 illustrates an example of a voice or unified messaging system at which telephone switches and messaging systems are deployed at multiple locations together with an enhanced central messaging system in accordance with an embodiment of the present invention;
Figure 4 illustrates an example implementation of the enhanced central messaging system of the embodiment of Figure 3: and
Figure 5 illustrates an example implementation of a messaging system deployed at a location in accordance with the embodiment of Figure 3.

### Description of the Preferred Embodiments

The present invention is described herein by way of reference to a particular example, and in particular to the example of a unified/voice messaging system. However the invention is not limited in its applicability to the specifics of the examples and embodiments described herein.

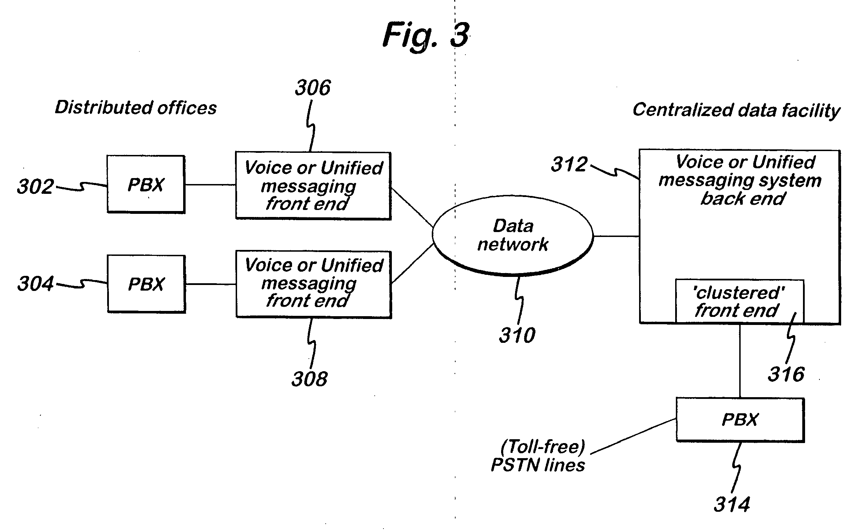

Referring to Figure 3 there is shown a unified/voice messaging system deployed in a geographically distributed manner and implemented in accordance with a preferred embodiment of the present invention.

At a first distributed or remote location there is provided a PBX 302, connected to an associated voice or unified messaging front-end 306. At a second distributed or remote location there is provided a PBX 304, connected to an associated voice or unified messaging front-end 308. Each of the voice or unified messaging front-ends 306 or 308 may be considered to be remote or distributed voice or unified messaging systems. Each of the remote voice or unified messaging systems 306 or 308 is connected to a data network 310, through which there is provided a connection to a common, centralized voice or unified messaging system back-end 312. The voice or unified messaging system back-end 312 may be considered to be a centralized voice or unified messaging system, or a centralized data facility. The centralized voice or unified messaging system 312 is, in the described embodiment, further provided with a 'clustered' front end, which provides, as will be described further hereinbelow, front-end functionality equivalent to the functionality provided by the front-end voice or unified messaging system 306 and 308. The 'clustered' front end is connected to a PBX 314.

The voice or unified messaging front-end 306 effectively defines a first voice mail domain VMD#1. All users associated with the PBX 302 belong to VMD#1. As is discussed further hereinbelow, certain of the voice or unified messaging functionality for VMD#1 is also provided centrally by the voice or unified messaging back-end 312. As such, the voice or unified messaging back-end 312 forms part of VMD#1.

The voice or unified messaging front-end 308 effectively defines a second voice mail domain VMD#2. All users associated with the PBX 304 belong to VMD#2. As is discussed further hereinbelow, certain of the voice or unified messaging functionality for VMD#2 is also provided centrally by the voice or unified messaging back-end 312. As such, the voice or unified messaging back-end 312 forms part of VMD#2.

In the preferred embodiment of the present invention there is further defined a third voice mail domain VMD#3. All users associated with PBX 314 belong to VMD#3. All of the voice or unified messaging functionality for VMD#3 is provided centrally by the voice or unified messaging back-end 312 and clustered front-end 316.

Thus, in the embodiment of Figure 3, users associated with remote PBX 302 are part of VMD#1, users associated with remote PBX 304 are part of VMD#2, and users associated with PBX 314 are part of VMD#3. Further remote locations may exist defining further voice mail domains, and individual voice mail domains may comprise multiple voice or unified messaging systems.

The functionality of the architecture of the system of Figure 3 in accordance with the preferred embodiment of the invention is now further described.

The front-end voice/unified messaging functionality of the voice or unified messaging front-ends 306 and 308 provide certain voice/unified messaging functions local to the respective PBX 302 and 304 for the respective voice mail domains independent of access to the centralized voice/unified messaging system back-end 312. The clustered front-end 316 provides certain voice/unified messaging functions for users of VMD#3. The back-end 312 provides certain voice/unified messaging functionality for all voice mail domains.

It should be noted that although the embodiment specifically discloses the provision of PBXs at remote locations, more generally the remote locations can be considered to be provided with a switching capability, or telecommunications switch. The invention is not limited to PBX implementations.

The front-end or remote system functionality may include, for example, call answering and automated attendant functionality. These front-end or remote systems may also provide subscriber access capability. However the implementation of subscriber access may depend on the data networking characteristics, i.e. quality of service (QoS) of the connection from the front-end to the back-end.

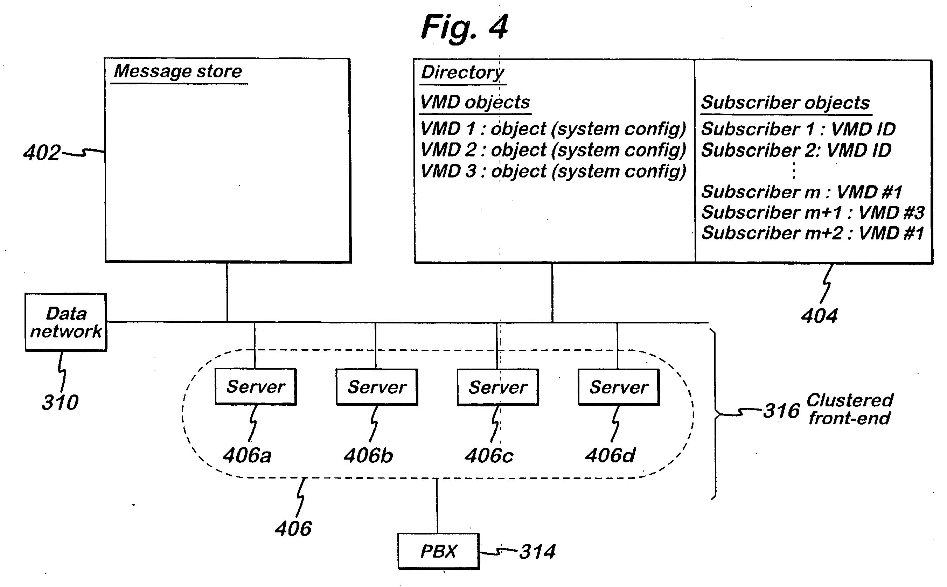

The implementation of the centralized data facility or voice/unified messaging system back-end system or central system of Figure 3 in accordance with an example embodiment of the invention is shown in Figure 4.

Referring to Figure 4, in a preferred embodiment the voice or unified messaging system back-end 312 comprises a message store 402, a directory 404, and a plurality of servers 406.

In Figure 4 there is shown four front-end servers 406a to 406d. The number of servers 406 is implementation dependent, and depends upon the overall capacity of the system needed to be supported. Additional servers may be provided to allow for redundancy to improve system reliability. The servers provide access to the voice or unified messaging system functionality for VMD#3, accessing the system via PBX 314.

For providing centralized voice or unified messaging functionality, the centralized voice or unified messaging system is configured for all voice mail domains. As shown in Figure 4 the centralized voice or unified messaging system is provided with a message store 402 and a directory 404. The message store 402 stores messages, such as voice mails and e-mails, associated with system users for all voice mail domains. The directory 404 stores descriptive attributes associated with those system users, and system configuration data. As shown in Figure 4, the directory 404 stores VMD objects defining system configuration data for each voice mail domain. The directory 404 additionally stores subscriber objects, defining the voice mail domain for each of the system subscribers.

As shown in Figure 4, there is provided a central group of servers 406 in the centralized system. The servers provide access to the voice or unified messaging system functionality.

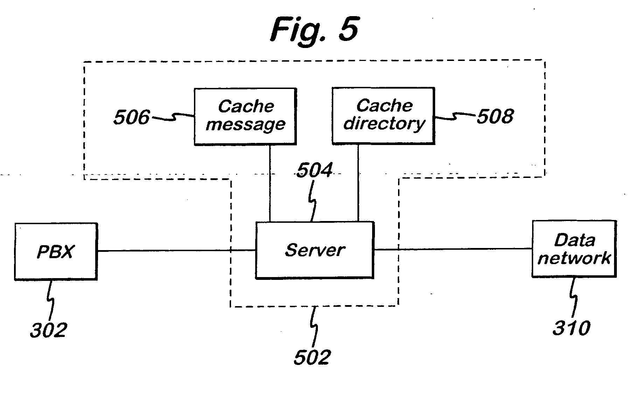

The implementation of the distributed voice/unified messaging system front-end or remote system of Figure 3 in accordance with an example embodiment of the invention is shown in Figure 5.

Each PBX, such as PBX 302, is associated with a remote voice server 504, which may also be considered to be a remote front-end voice server. As can be seen, the remote voice server 504 is connected to the data network 310. The remote voice server 504 is associated with a cache message store 506 and a cache directory store 508, illustrated in Figure 5. In accordance with a preferred embodiment of the present invention, and as discussed further hereinbelow, information associated with the users connected to the PBX 302, and stored in the corresponding message store 402 and directory store 404 of Figure 4, are copied to the caches 506 and 508 of Figure 5, such that a local copy of such information is available. As will be further discussed hereinbelow, remote voice or unified messaging functionality is provided by the front-end voice server 504 and caches 506 and 508, generally designated by reference numeral 502 and considered to be the voice or unified messaging front-end. It should be further noted that each PBX may be associated with more than one front-end voice server 504.

The invention provides, in a first embodiment, mechanisms to allow call answering and automated attendant functionality to operate when supported by low-guarantee network connectivity from the messaging system back-end. This is achieved by providing the necessary functionality at the front end. As such the provision of the functionality is not dependent upon any permanently available back-end or central connectivity. This is achieved by providing the necessary data, logic and control parameters to achieve such functionality in the caches. The back-end or central systems provide the primary message storage and directory storage and configuration data. All data, messages, user properties and system configuration information is primarily stored at the back-end or central system.

The invention provides in a second embodiment a mechanism for reliable subscriber access through direct connectivity to a large 'clustered' back-end system, in the centralized data storage facility, as provided for in Figure 4.

In the following description, the invention is considered in two parts, although it should be understood that much of the functionality is shared. The invention is also described by way of reference to examples of specific feature implementations, but is not limited to such.

In a first embodiment, there is described in accordance with a preferred implementation of the invention the implementation of a call answering function and an automated attendant function supported remotely from the distributed centralized data facility, via a low QOS data network, as illustrated in Figures 4 and 5. This relates, more generally, to a description of those functions which can be provided independent of access to the back-end.

Call answering is a relatively simple process with only limited requirement for access to user and system data. The call answering process requires access to data of the following classes:
I. System properties, including system configuration data such as language availability; and
II. User properties, such as user configuration data such as 'find-me' rules and user status (e.g. extended absence), as well as associated audio greetings.

The front-end systems associated with each PBX need to maintain a cached copy of this data to allow a high degree of quality and reliability in the call answering process regardless of the connectivity to the back-end.

Preferably a cache management process operates in the background (at a predefined time interval, e.g. 5 minutes) and creates a local (and persisted) cache of both system and user properties from the back-end primary stores. As shown in Figure 4, the directory includes voice mail domain (VMD) objects and subscriber objects. For VMD objects the system configuration parameters for each voice mail domain are defined. For subscriber objects the VMD identity for each subscriber is defined. This information is cached at the remote system. The cache management is preferably provided by the front-end or remote system. A time-stamp is preferably stored for user greetings in the message store. Before an audio greeting is played, the front-end system may check the time of last-update on the back-end primary version of the greeting. If the front-end cached version of a greeting is correct, then it is used. Otherwise a copy may be fetched from the back-end. In general, call answering results in recording an audio message. This can be submitted for delivery in the background with little real-time network capability.

Automated attendant, when supported by a cache of user and system properties as shown in Figure 5, can also work in the local front-end system.

It is also possible to 'dynamically cache' information to reduce the effects of network latency and 'smooth-off bursts of high network bandwidth requirements. As an example, the n+1th message can be pre-fetched when the nth message is played. This serves, to a point, to provide improved operation on poor networks but cannot cover all real-world network (e.g. total WAN failure) conditions.

Subscribers of VMD#3 access voice or unified messaging functionality in a conventional manner, all functionality being provided by the primary data stored in the centralized voice or unified messaging system back-end 312.

As discussed above, voice messaging or unified messaging functionality in VMD#1 and VMD#2 is preferably provided by the localized cached information. Where functionality requires direct centralized access, this can be provided by access to the centralized data facility via the data network. Such access may be required for certain subscriber access functions.

In a second embodiment, there is described in accordance with a preferred embodiment of the invention the implementation of a subscriber access function for all voice mail domains supported at a shared centralized front-end system, as illustrated in Figure 4, whilst exhibiting the same user characteristics as if calling a local system in the arrangement of Figure 1. The advantage of such an arrangement is that subscriber access functions may be provided if the link for the remote systems to the centralized data facility is not available.

In the preferred embodiment, all subscribers of all voice mail domains may call into PBX 314, which may have a toll-free number associated therewith, for subscriber access functions. The system of Figure 3 may be an enterprise system of a single organization, and the toll-free number may be an enterprise wide number for all voice mail domains within the enterprise.

Existing voice mail systems contain considerable system configuration data which defines the operation of the system. This information, in the Avaya Unified Messenger and MMA systems, is stored within a directory object called a voice mail domain object, in the directory of Figure 4. In the preferred embodiments of the present invention, as discussed above, the front-end systems maintain a cache of this information, while the back-end systems manage the primary copy of the configuration data. In existing systems, and as mentioned hereinabove, multiple front-end systems can be part of a single voice mail domain.

However, critically, in order to provide centralized subscriber access, the front-end systems 316 co-located with the centralized data stores 312 need to be able to be part of multiple voice mail domains. A call coming into the clustered front-end 316 may be associated with any VMD, and there is therefore a need to handle the call appropriately for any VMD. The single (large) centralized system of Figure 4 must be able to operate as part of all voice mail domains for which subscriber mailboxes are hosted. All voice mail domains are defined by directory objects stored in the directory systems within the back-end systems and as a consequence this configuration data is available to both local and centralized front-end systems. This access to the configuration data of all voice mail domains is provided by the network interface of Figure 4, and stored locally in the caches of Figure 5.

Subscribers calling into the large centralized front-end system (via the toll-free PBX access) must be identified. This identification can be based, for example, on various options:
a) Identification of the called number. This works if the subscribers of each voice mail domain are given a different number to call (possibly an 800 'toll-free' number). In such case their locally-valid mailbox number is enough to identify the subscribers as their voice mail domain can be known. The centralized voice servers may therefore include a look-up table matching dialed numbers to voice mail domains.
b) By logging into the system using an enterprise/organization wide numeric address, and not their usual mailbox/extension number (which is only valid in conjunction with their voice mail domain). This address allows the user to be identified, from which a VMD can be identified.
c) By identifying and recognizing the caller's number, for example the subscribers cell phone, home phone or work phone numbers may be stored in a look-up table.

The clustered or centralized voice servers 406 of Figure 4 can be adapted to provide identification of the calling party as described above to interpret the call for the appropriate voice mail domain.

Once the voice mail domain (VMD) and the subscriber are identified the centralized front-end system of Figure 4 needs to provide an interaction which is identical to that experienced by a subscriber calling into a local front-end system of Figure 1. The front-end system 306 thus effectively shifts it's *modus operandi* based on the voice mail domain information, i.e. the system operates as if it were the voice mail domain identified. All system parameter information is available and used to provide the required interface.

Once logged on, subscribers are presented with the correct addressing options. Addressing a message to a user by their mailbox/extension number must work correctly. A user within location 1 (e.g. voice mail domain VMD#1) addressing a message to "4003", needs to have this resolved to the 4003 mailbox (at location 1). A user from location 2 (e.g. voice mail domain VMD#2) may address to the same number and must have this resolved to a different mailbox. The provision of the clustered front-end 316 of Figure 3 and 406 of Figure 4 provides for such features to work correctly.

Certain voice/unified messaging scenarios result in the system launching outbound calls. To allow centralized systems to perform this correctly, telephone numbers must be stored in their canonical form. Both types of front-end systems (distributed and centralized) are preferably configured with rules to, ensure calls are correctly dialed.

In summary, therefore, in embodiments the present invention provides for the provisions of distributed messaging system functionality and centralized messaging system functionality, in which the distributed functionality is provided by cached stores from the centralized system, and in which users of the distributed systems may access certain functionality through direct access to the centralized system.

The present invention is described herein with reference to particular examples. The invention is not limited in its applicability to the examples given. One skilled in the art will appreciate the general applicability of the present invention.

## Claims

1. A messaging system comprising a plurality of distributed front-end messaging systems (306, 308, 502) and a centralized data store (312, 402, 404) associated with said distributed front-end messaging systems, in which messaging system the centralized data store includes means for storing data associated with users of the distributed front-end messaging systems, each distributed front-end messaging system being **characterized by** further including a respective at least one dynamic cache means (506, 508) adapted for storing message data of the centralized data associated with users of the respective distributed front-end messaging system and for pre-fetching a subsequent message when a current message is played,
the system being further adapted for providing at least one messaging function to users of each distributed front-end messaging system, which messaging function is dependent on the data stored in said dynamic cache means.

2. A messaging system according to claim 1 wherein said data is message and directory data.

3. A messaging system according to claim 1 or claim 2 wherein the centralized data store is adapted to store data associated with all users of said front-end messaging systems.

4. A messaging system according to any one of claims 1 to 3 wherein there is further provided a centralized front-end messaging system associated with said centralized data store.

5. A messaging system according to claim 4 wherein the centralized front-end messaging system is associated with a plurality of users, data associated with said users being stored in the centralized data store.

6. A messaging system according to claim 4 or claim 5 wherein the centralized front-end messaging system provides at least one messaging function for users of said at least one distributed front-end messaging system.

7. A messaging system according to claim 6 wherein the centralized front-end messaging system is adapted to identify the front-end messaging system of a user.

8. A messaging system according to claim 7 wherein the centralized messaging system is adapted to identify the front-end messaging system of a user in dependence on a called number, a calling number, or a unique user identifier.

9. A messaging system according to any one of claims 6 to 8 wherein the centralized messaging system provides access to all stored data associated with said at least one distributed front-end messaging system associated with the user.

10. A messaging system according to any preceding claim wherein the centralized data store stores configuration data and message data associated with all users.

11. A messaging system according to any preceding claim wherein the at least one messaging function is a voice messaging function which includes call answering.

12. A messaging system according to any one of claims 6 to 11 wherein said at least one messaging function provided by the centralized front-end messaging system is a messaging access function for a subscriber.

13. A messaging system according to any preceding claim wherein each front-end messaging system is associated with a respective voice mail domain.

14. A messaging system according to any preceding claim wherein each front-end messaging system is associated with a telecommunications switch.

15. A method of configuring a messaging system comprising: storing, at a centralized location (312, 402, 404), data associated with all users of the messaging system; storing, at a plurality of distributed locations (306, 308, 502), at least part of said data associated with users at the distributed locations, **characterized in that** the method further comprising providing at least one messaging function to users at respective distributed locations, which messaging function is dependent on the data stored at the distributed location, wherein the step of storing message data at said distributed locations comprises the step of dynamically caching the data at the centralized location such that a subsequent message is pre-fetched when a current message is played.

16. A method according to claim 15 comprising the step of providing at least one messaging function to users at respective distributed locations by accessing data stored at the centralized location.

17. A method according to claim 16 further comprising the step of accessing the centralized location directly.

## Patentansprüche

1. Nachrichtensystem, das mehrere verteilte Front-End-Nachrichtensysteme (306, 308, 502) und einen zentralisierten Datenspeicher (312, 402, 404) umfasst, der mit den verteilten Front-End-Nachrichtensystemen verbunden ist, wobei der zentralisierte Datenspeicher in dem Nachrichtensystem Mittel zum Speichern von Daten aufweist, die mit Benutzern der verteilten Front-End-Nachrichtensysteme verbunden sind, wobei jedes verteilte Front-End-Nachrichtensystem **dadurch gekennzeichnet ist, dass** es weiterhin jeweils mindestens ein dynamisches Zwischenspeichermittel (506, 508) aufweist, das zum Speichern von Nachrichtendaten der zentralisierten Daten, die mit Benutzern des jeweiligen verteilten Front-End-Nachrichtensystems verbunden sind, und zum Vorauslesen einer folgenden Nachricht, wenn eine aktuelle Nachricht abgespielt wird, eingerichtet ist, wobei das System weiterhin zum Bereitstellen mindestens einer Nachrichtenfunktion Benutzern jedes verteilten Front-End-Nachrichtensystems eingerichtet ist, wobei die Nachrichtenfunktion von den Daten abhängt, die in dem dynamischen Zwischenspeichermittel gespeichert sind.

2. Nachrichtensystem nach Anspruch 1, wobei die Daten Nachrichten- und Verzeichnisdaten sind.

3. Nachrichtensystem nach Anspruch 1 oder 2, wobei der zentralisierte Datenspeicher dazu eingerichtet ist, Daten zu speichern, die mit allen Benutzern der Front-End-Nachrichtensysteme verbunden sind.

4. Nachrichtensystem nach einem der Ansprüche 1 bis 3, wobei weiterhin ein zentralisiertes Front-End-Nachrichtensystem vorgesehen ist, das mit dem zentralisierten Datenspeicher verbunden ist.

5. Nachrichtensystem nach Anspruch 4, wobei das zentralisierte Front-End-Nachrichtensystem mit mehreren Benutzern verbunden ist, wobei Daten, die mit den Benutzern verbunden sind, in dem zentralisierten Datenspeicher gespeichert werden.

6. Nachrichtensystem nach Anspruch 4 oder 5, wobei das zentralisierte Front-End-Nachrichtensystem mindestens eine Nachrichtenfunktion für Benutzer des mindestens einen verteilten Front-End-Nachrichtensystems bereitstellt.

7. Nachrichtensystem nach Anspruch 6, wobei das zentralisierte Front-End-Nachrichtensystem dazu eingerichtet ist, das Front-End-Nachrichtensystem eines Benutzers zu identifizieren.

8. Nachrichtensystem nach Anspruch 7, wobei das zentralisierte Nachrichtensystem dazu eingerichtet ist, das Front-End-Nachrichtensystem eines Benutzers in Abhängigkeit von einer angerufenen Nummer, einer Rufnummer oder einer eindeutigen Benutzerkennung zu identifizieren.

9. Nachrichtensystem nach einem der Ansprüche 6 bis 8, wobei das zentralisierte Nachrichtensystem Zugriff auf alle gespeicherten Daten bereitstellt, die mit dem mindestens einen verteilten Front-End-Nachrichtensystem verbunden sind, das mit dem Benutzer verbunden ist.

10. Nachrichtensystem nach einem vorhergehenden Anspruch, wobei der zentralisierte Datenspeicher Konfigurationsdaten und Nachrichtendaten speichert, die mit allen Benutzern verbunden sind.

11. Nachrichtensystem nach einem vorhergehenden Anspruch, wobei die mindestens eine Nachrichtenfunktion eine Sprachnachrichtenfunktion ist, die Anrufbeantwortung beinhaltet.

12. Nachrichtensystem nach einem der Ansprüche 6 bis 11, wobei die mindestens eine Nachrichtenfunktion, die von dem zentralisierten Front-End-Nachrichtensystem bereitgestellt wird, eine Nachrichtenzugriffsfunktion für einen Teilnehmer ist.

13. Nachrichtensystem nach einem vorhergehenden Anspruch, wobei jedes Front-End-Nachrichtensystem mit einer jeweiligen Voicemail-Domäne verbunden ist.

14. Nachrichtensystem nach einem vorhergehenden Anspruch, wobei jedes Front-End-Nachrichtensystem mit einer Telekommunikationsvermittlungsstelle verbunden ist.

15. Verfahren zum Konfigurieren eines Nachrichtensystems, wobei das Verfahren Folgendes umfasst: Speichern von Daten, die mit allen Benutzern des Nachrichtensystems verbunden sind, an einem zentralisierten Ort (312, 402, 404); Speichern mindestens eines Teils der Daten an mehreren verteilten Orten (306, 308, 502), wobei die Daten mit Benutzern an den verteilten Orten verbunden sind, **dadurch gekennzeichnet, dass** das Verfahren weiterhin das Bereitstellen mindestens einer Nachrichtenfunktion Benutzern an jeweiligen verteilten Orten umfasst, wobei die Nachrichtenfunktion von den Daten abhängt, die an dem verteilten Ort gespeichert sind, wobei der Schritt des Speicherns von Nachrichtendaten an den verteilten Orten den Schritt des dynamischen Zwischenspeicherns der Daten an dem zentralisierten Ort umfasst, so dass eine folgende Nachricht vorausgelesen wird, wenn eine aktuelle Nachricht abgespielt wird.

16. Verfahren nach Anspruch 15, das den Schritt des Bereitstellens mindestens einer Nachrichtenfunktion Benutzern an jeweiligen verteilten Orten durch Zugreifen auf Daten, die an dem zentralisierten Ort gespeichert sind, umfasst.

17. Verfahren nach Anspruch 16, das weiterhin den Schritt des direkten Zugreifens auf den zentralisierten Ort umfasst.

## Revendications

1. Système de messagerie comportant une pluralité de systèmes de messagerie du type frontal répartis (306, 308, 502) et un dispositif de stockage de données centralisé (312, 402, 404) associé auxdits systèmes de messagerie du type frontal répartis, système de messagerie dans lequel le dispositif de stockage de données centralisé comprend des moyens permettant de stocker des données associées à des utilisateurs des systèmes de messagerie du type frontal répartis, chaque système de messagerie du type frontal réparti étant **caractérisé par** ce qu'il comprend par ailleurs au moins un moyen de mémoire cache dynamique respectif (506, 508) adapté à des fins de stockage des données de messages des données centralisées associées à des utilisateurs du système de messagerie du type frontal réparti respectif et à des fins de lecture anticipée d'un message subséquent quand un message en cours est transmis, le système étant par ailleurs adapté à des fins de fourniture d'au moins une fonction de messagerie à des utilisateurs de chaque système de messagerie du type frontal réparti, fonction de messagerie qui est dépendante des données stockées dans ledit moyen de mémoire cache dynamique.

2. Système de messagerie selon la revendication 1, dans lequel lesdites données sont des données de messages et de répertoires.

3. Système de messagerie selon la revendication 1 ou la revendication 2, dans lequel le dispositif de stockage de données centralisé est adapté pour stocker des données associées à tous les utilisateurs desdits systèmes de messagerie du type frontal.

4. Système de messagerie selon l'une quelconque des revendications 1 à 3, dans lequel il est par ailleurs prévu un système de messagerie du type frontal centralisé associé audit dispositif de stockage de données centralisé.

5. Système de messagerie selon la revendication 4, dans lequel le système de messagerie du type frontal centralisé est associé à une pluralité d'utilisateurs, les données associées auxdits utilisateurs étant stockées dans le dispositif de stockage de données centralisé.

6. Système de messagerie selon la revendication 4 ou la revendication 5, dans lequel le système de messagerie du type frontal centralisé fournit au moins une fonction de messagerie aux utilisateurs dudit au moins un système de messagerie du type frontal réparti.

7. Système de messagerie selon la revendication 6, dans lequel le système de messagerie du type frontal centralisé est adapté pour identifier le système de messagerie du type frontal d'un utilisateur.

8. Système de messagerie selon la revendication 7, dans lequel le système de messagerie centralisé est adapté pour identifier le système de messagerie du type frontal d'un utilisateur en fonction d'un numéro appelé, d'un numéro appelant, ou d'un identificateur d'utilisateur unique.

9. Système de messagerie selon l'une quelconque des revendications 6 à 8, dans lequel le système de messagerie centralisé donne accès à toutes les données stockées associées audit au moins un système de messagerie du type frontal réparti associé à l'utilisateur.

10. Système de messagerie selon l'une quelconque des revendications précédentes, dans lequel le dispositif de stockage de données centralisé stocke des données de configuration et des données de messages associées à tous les utilisateurs.

11. Système de messagerie selon l'une quelconque des revendications précédentes, dans lequel ladite au moins une fonction de messagerie est une fonction de messagerie vocale qui comprend la réception d'appels.

12. Système de messagerie selon l'une quelconque des revendications 6 à 11, dans lequel ladite au moins une fonction de messagerie fournie par le système de messagerie du type frontal centralisé est une fonction d'accès de messagerie pour un abonné.

13. Système de messagerie selon l'une quelconque des revendications précédentes, dans lequel chaque système de messagerie du type frontal est associé à un domaine de courrier vocal respectif.

14. Système de messagerie selon l'une quelconque des revendications précédentes, dans lequel chaque système de messagerie du type frontal est associé à un commutateur de télécommunications.

15. Procédé permettant de configurer un système de messagerie comportant : l'étape consistant à stocker, au niveau d'un emplacement centralisé (312, 402, 404), des données associées à tous les utilisateurs du système de messagerie ; l'étape consistant à stocker, au niveau d'une pluralité d'emplacements répartis (306, 308, 502), au moins une partie desdites données associées aux utilisateurs au niveau des emplacements répartis, **caractérisé en ce que** le procédé comporte par ailleurs l'étape consistant à fournir au moins une fonction de messagerie aux utilisateurs au niveau d'emplacements répartis respectifs, fonction de messagerie qui est fonction des données stockées au niveau de l'emplacement réparti, dans lequel l'étape consistant à stocker des données de messages au niveau desdits emplacements répartis comporte l'étape consistant à mettre en mémoire de manière dynamique les données au niveau de l'emplacement centralisé de telle sorte qu'un message subséquent est lu de manière anticipée quand un message en cours est transmis.

16. Procédé selon la revendication 15, comportant l'étape consistant à fournir au moins une fonction de messagerie aux utilisateurs au niveau d'emplacements répartis respectifs en accédant aux données stockées au niveau de l'emplacement centralisé.

17. Procédé selon la revendication 16, comportant par ailleurs l'étape consistant à accéder à l'emplacement centralisé directement.
